# EUROPEAN PATENT APPLICATION

(11) **EP 2 330 871 A1**
(43) Date of publication of application: **08.06.2011**
(21) Application number: 09177796.1
(22) Date of filing: 02.12.2009
(51) Int. Cl.: H05B 41/28, H02M 3/335

(54) **A power unit for lighting applications**

(71) Applicant: NXP B.V., 5656 AG Eindhoven (NL)
(72) Inventor: Hoogzaad, Gian, Redhill Surrey RH1 1DL (GB)
(74) Representative: Hardingham, Christopher Mark

(57) **Abstract**

A power unit for lighting applications is disclosed, which power unit comprises a full-wave rectified main power supply and a stand-by power supply. The power supply is a charge-pump AC/DC converter, and adapted for supplying a microcontroller and optionally a transceiver with at least the power required for start-up operations including switching on the main power supply. In preferred embodiments, the charge-pump AC/DC converter is configured to be full-wave rectified, and symmetrical about the AC (typically mains) input, by means of a pair a charge-pump capacitors.

## Description

### Field of the Invention

This invention relates to power units for lighting applications. It further relates to charge-pump power supplies adapted for use in such power units.

### Background of the Invention

Presently, the network infrastructure for most lighting systems is based on wires. For professional applications this wired lighting control can be addressed for example with Dali (digital addressable lighting interface), DMX (digital multiplexed) or Power line (narrowband over the mains wires). For residential applications the lighting control is on the mains wire by means of a wall mounted switch for on/off or a wall mounted dimmer for dimming. There is a trend in the market towards wireless lighting control. This can be based on WLAN, Bluetooth, Zigbee or RF communication in the ISM band (315 to 915MHz). The cost of installation for wireless lighting control is competitive relative to wired control. The system elements in a wireless lighting system are lamps equipped with communication technology and remote controls. So, the lamps will continuously be connected to the mains and consequently standby power consumption becomes very important. A minimum standby power of several mW to tens of mW is needed for the receiver functionality that keeps listening to incoming signals. The remote control will typically be powered from a battery.

The general problem of achieving low standby power is solved at the architectural level by separating the high-power path from the low-power path. Elements of the high-power path consist of lamp and lampdriver, while the elements of the low power path consist of transceiver and micro controller. Consequently, a separate AC/DC supply is used for the low power path. This AC/DC supply can be cost effectively and power efficiently implemented by means of a mains-driven charge-pump.

However, a problem arises when a charge pump power supply is arranged in parallel with a full wave rectifier such as is required for a rectified application such as, for instance, LED lighting: the full wave rectifier has a smoothing capacitor Cbus on its output, and under conditions where there is no load being drawn from the rectified output (such as during standby), the current through the charge pump capacitor (Ccp) will charge the bus capacitor to ever-increasing voltages, resulting in an over-voltage on the rectified output.

There is a need for an alternative arrangement which reduces or avoids the above problem.

### Summary of the invention

According to the invention there is provided in a power unit for lighting applications, the power unit having opposite first and second input nodes and comprising a main power supply and a stand-by power supply configured to switch the main power-supply, wherein the main power supply comprises a full-wave rectifier electrically connected to the first and second input nodes, and the stand-by power supply is connected to the first and second input nodes and comprises a charge-pump AC/DC converter. The power unit may thus be made particularly efficient and cost-effective in the standby mode.

In embodiments, the charge-pump AC/DC converter comprises a first charge-pump capacitor electrically connected to the first input node and a second charge-pump capacitor electrically connected to a second input node. Build-up of voltage on the output of the rectifier in no load conditions may thereby be reduced.

In embodiments, the first charge-pump capacitor and the second charge-pump capacitor have the same or substantially the same capacitance. This may substantially eliminate build-up of the voltage on the output of rectifier and are thus minimise or avoid over-voltage conditions.

In embodiments, the power unit further comprises a respective fusistor electrically connected in series with the each of the first and second charge-pump capacitors.

In embodiments the charge-pump AC/DC converter further comprises a linear regulator. In other embodiments the charge-pump AC/DC converter further comprises a DC-DC converter.

In embodiments, the power unit may comprise a microcontroller which is configured to be powered by the stand-by power supply. It may further or alternatively comprise a receiver or transceiver which is configured to be powered by the stand-by power supply.

In embodiments, the charge-pump AC/DC converter is configured to be able to supply a first power level which is required by the microcontroller and/or receiver/transceiver during start-up, and not to be able to supply a second power level, which second power level is higher than the first power level and is required by the microcontroller and/or receiver/transceiver during normal operation.

In embodiments the main power supply comprises a supplemental power output which is configured for supplementing the power supplied by the AC/DC charge-pump converter. The standby power unit may thereby be enabled to be dimensioned smaller than would otherwise be the case

In embodiments the main power unit comprises an electronic ballast, and the electronic ballast may be configured for powering one type of lamp out of the group of types of lamps comprising fluorescent lamps and LED lamps.

According to another aspect of the invention there is provided a charge pump AC/DC converter adapted for use in a power unit as described above.

These and other aspects of the invention will be apparent from, and elucidated with reference to, the embodiments described hereinafter.

### Brief description of Drawings

Embodiments of the invention will be described, by way of example only, with reference to the drawings, in which
figure 1 shows an architecture for a smart lighting network including a power unit having main and standby power supplies;
figure 2 illustrates an architecture similar to figure 1 in which the main power supply provides supplemental power to the standby power supply;
figure 3a illustrates a typical half-wave rectified charge-pump power supply;
figure 3b illustrates an alternative half-wave rectified charge-pump power supply;
figure 4 illustrates a half-wave rectified charge-pump power supply connected in parallel with a full-wave rectifier; and
figure 5 illustrates a full-wave rectified symmetrical charge-pump power supply connected in parallel with a full-wave rectifier.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments

### Detailed description of embodiments

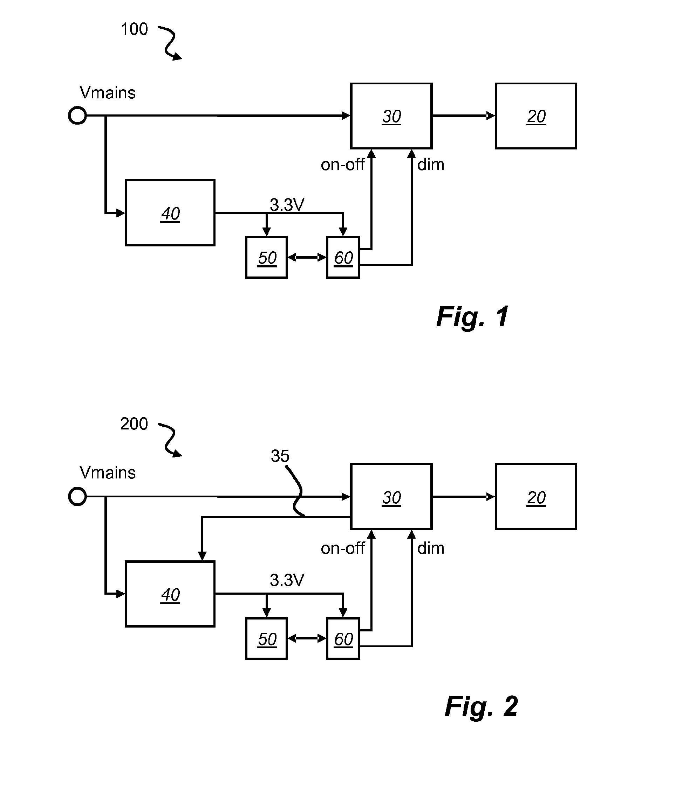

Figure 1 shows an architecture for a smart lighting network lamp power 100. A lamp 20 is driven from a mains input (Vmains), by means of the main power supply, which is typically an AC/DC lamp driver 30. This provides a high-power path to the lamp. In addition, a standby power supply 40 is also powered by the mains input Vmains. The standby power supply 40 provides a low voltage output, which is typically at 3.3 V, and thus provides a low-power path. The standby power supply powers microcontroller 60, which is able to provide on-off and typically dimming functionality. In order to provide these functions it controls the main power supply and lamp driver 30. The architecture may also include a receiver or transceiver 50, which is also powered by the standby power supply 40, for providing remote control to the lamp driver 30.

The lamp 20 can be any type of lamp, but is typically either a fluorescent lamp (CFL, TL) or LED lamp. Accordingly, the AC/DC lamp driver 30 is typically an electronic ballast suited for fluorescent lamps or LEDs. Part of this electronic ballast can be a driver IC such as the UBA2028 for CFL, based on half-bridge resonant topology and supplied by NXP Semiconductors, or the SSL1523 for LED, which is based on flyback topology and also supplied by NXP Semiconductors. In parallel to the high power path for the lamp is the low power path for the transceiver and micro controller, as a result of which during standby the lamp driver can be completely turned off (for instance, by forcing the supply voltage VDD of the driver IC to ground) since power is needed for the receiver only. Accordingly, the AC/DC standby supply can be optimized for low power operation.

An alternative architecture is shown in figure 2, wherein the AC/DC lamp driver 30 provides an additional, low voltage output 35, which can supply supplementary power to the standby power supply 40 This low voltage output may typically be at the clamped voltage of a Zener diode, and be connected upstream of the regulator in the standby power supply 40. In this case, the standby supply may be dimensioned only for the amount of required standby power including startup, and the likely higher required 3.3V power during active operation for the transceiver and micro controller is co-delivered by the supplementary output of the AC/DC lamp-driver (which is operating for instance at to the supply rail VDD of its driver IC, or is operated from an auxiliary winding from the inductive element (coil or transformer) in the ballast).

For a typical application, the lamp driver 30 and lamp 20 may require zero power in standby mode and perhaps 20W maximum in active operational mode; the microcontroller 60 and receiver (or transceiver) 50 may require typically perhaps10 mW in standby power mode and 30 mW in active operational mode.

The architectures shown in figures 1 and 2 illustrates the microcontroller 60 providing on-off and dimming functionality to the lamp driver, which is typically sufficient for white lamps such as fluorescent lamps including compact fluorescent lamps (CFL), tube-luminescent (TL), and white light emitting diodes (LEDs). In this case, only a receiver is required at box 60. However, in other applications a transceiver may be used at 60, thus providing a reverse communication path. Where a transceiver is used, all kinds of status information may be transmitted to the remote control: this could include, for instance, acknowledging the on-off and dimming information, an indication of lamp failure, temperature, over-temperature, end of life or residual life information. Maintenance scheduling information could also thus be provided.

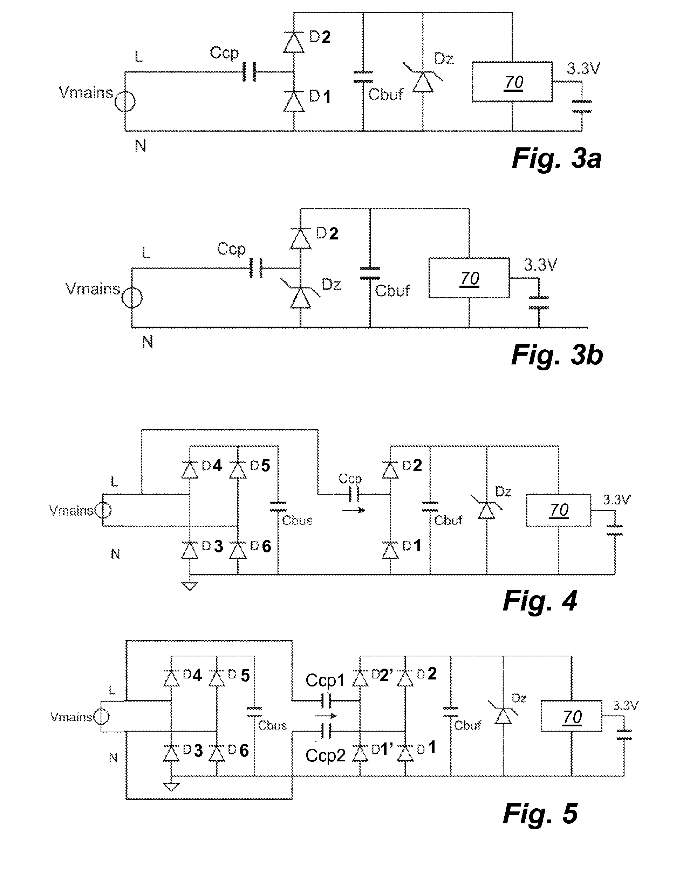

A cost-effective and power-efficient solution for low-power AC/DC supplies is a mains driven charge pump. Two configurations of mains driven AC/DC charge pumps are shown in figure 3: at figure 3a is shown a charge pump power supply and wherein a mains voltage (Vmains), is cut connected across a series arrangement of a charge pump capacitor Ccp and a diode D1. A buffer capacitor Cbuf is connected across a series combination of D1 and a further diode D2. A Zener diode Dz is connected across the output buffer capacitor, to clamp the maximal charge-pumped voltage, and the desired regulated output voltage (shown as 3.3V) is provided by a linear regulator, 70, as shown.

Figures 3b shows a similar arrangement; however in this implementation diode D1 is replaced by the Zener diode DZ, and no separate output diode Zener diode is required.

Typically some post-regulation is required after the charge-pump to get a stable 3.3V output. The post-regulation is shown as a linear regulator 70, but can also be a DC-DC converter, which would be at the expense of extra components and complexity, but could provide a higher efficiency.

A problem arises when this charge-pump is used together with a rectified lamp-driver. The ground of the 3.3V supply should equal the ground of the lamp-driver such that the micro controller can interface directly with the lamp-driver.

Such an arrangement is shown in Figure 4. This figure shows a half-wave rectified charge pump power supply, such as that shown in figure 3a, connected in parallel with a full-wave rectifier, which forms part of the AC/DC lamp-driver 30, and comprises a network of diodes D3, D4, D5 and D6 together with a bus capacitor Cbus. Considering the current paths, it can be seen that during the falling slope of mains voltage from the first mains node L, the current through the capacitor charge-pump Ccp is negative (according to the arrow in figure 4) and will charge the bus capacitor Cbus to ever-increasing voltages when the power is not taken by a load connected to Cbus (in this case the lamp driver + lamp). This is the case during standby.

This problem is solved, according to embodiment of the invention, by use of a full-wave rectified charge pump arrangement as shown in figure 5. Figure 5 shows a mains rectifier as in figure 4, and includes a new configuration of a charge pump power supply: instead of a single charge-pump capacitor between the two diodes D1 and D2, as shown in figure 4, and connected to the first mains terminal or node L, in this arrangement there are two charge pump capacitors, Ccp1 and Ccp2, each connected to the mid-node point of a pair of diodes D1 and D2, and D1' and D2' respectively. The charge pump capacitors Ccp1 and Ccp2 are connected to the first and second mains terminals or nodes L and N respectively. The charge-pump thus operates not as a half-wave rectifier, but as a full-wave rectifier. In the case that the capacitances of the two charge pump capacitors are equal, the arrangement is symmetrical with respect to the input mains Vmains. The charge-pump current now flows round through both charge-pump capacitors: when the current through one is positive (according to the arrow in figure 5), then the current through the other is negative (according to the arrow in figure 5). This prevents runaway of the bus voltage Vbus when no power is taken by its load, that is to say, the lamp-driver 20 + lamp 10).

In another embodiment the full-wave rectified charge pump supply is based around the half-wave rectified charge pump power supply shown in figure 3. In this embodiment, instead of having a Zener diode on the output side, each charge pump diode D1 and D1' is replaced by Zener diodes DZ and DZ' respectively.

In embodiments, a resistor may be included in series with one or each of the charge-pump capacitors Ccp1, Ccp2. In particular, these resistors may be provided as fusistors, and act as current limiters for protection against mains spikes in normal operation, and for protection in the case of short-circuit failure of a charge-pump capacitor.

Although the invention has been described in relation to lighting applications, the skilled person will immediately appreciate that it is also applicable in other applications where a low standby power is needed for mains connected systems, such as, without limitation, actuators or sensors.

From reading the present disclosure, other variations and modifications will be apparent to the skilled person. Such variations and modifications may involve equivalent and other features which are already known in the art of power supplies, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A power unit for lighting applications, the power unit having opposite first and second input nodes (L,N) and comprising a main power supply (30) and a stand-by power supply (40) configured to switch the main power-supply,
wherein the main power supply comprises a full-wave rectifier electrically connected to the first and second input nodes(D3, D4, D5, D6), and the stand-by power supply is connected to the first and second input nodes and comprises a charge-pump AC/DC converter (D1,D2, D1', D2' Cccp1, Ccp2, 70).

2. A power unit as claimed in claim 1, wherein the charge-pump AC/DC converter comprises a first charge-pump capacitor (Ccp1) electrically connected to the first input node (L) and a second charge-pump capacitor (Ccp2) electrically connected to a second input node (N).

3. A power unit as claimed in claim 2, wherein the first charge-pump capacitor (Ccp1) and the second charge-pump capacitor (Ccp2) have the same or substantially the same capacitance.

4. A power unit as claimed in claim 2 to 3, further comprising a respective fusistor electrically connected in series with the each of the first and second charge-pump capacitors (Cccp1, Ccp2).

5. A power unit as claimed in any preceding claim, wherein the charge-pump AC/DC converter further comprises a linear regulator (70).

6. A power unit as claimed in any of claims 1-4 wherein the charge-pump AC/DC converter further comprises a DC-DC converter.

7. A power unit as claimed in any preceding claim further comprising a microcontroller (60) which is configured to be powered by the stand-by power supply.

8. A power unit as claimed in claim 7, further comprising a receiver or transceiver (70) which is configured to be powered by the stand-by power supply.

9. A power unit as claimed in claim 7, wherein the charge-pump AC/DC converter is configured to be able to supply a first power level which is required by the microcontroller during start-up, and not to be able to supply a second power level, which second power level is higher than the first power level and is required by the microcontroller during normal operation.

10. A power unit as claimed in claim 8, wherein, the charge-pump AC/DC converter is configured to be able to supply a first power level which is required by the microcontroller together with the respective receiver or transceiver during start-up, and not to be able to supply a second power level, which second power level is higher than the first power level and is required by the microcontroller together with the either receiver or transceiver during normal operation.

11. A power unit as claimed in claim 9 or 10, wherein the main power supply comprises a supplemental power output which is configured for supplementing the power supplied by the AC/DC charge-pump converter.

12. A power unit as claimed in any proceeding claim, wherein the main power unit comprises an electronic ballast.

13. A power unit as claimed in claim 12, wherein the electronic ballast is configured for powering one type of lamp out of the group of types of lamps comprising fluorescent lamps and LED lamps.

14. A charge-pump AC/DC converter (40) adapted for use in a power unit as claimed in any of claims 2 to 6, 9 or 10.
